# EUROPÄISCHE PATENTSCHRIFT

(11) **EP 3 384 544 B1**
(45) Veröffentlichungstag und Bekanntmachung des Hinweises auf die Patenterteilung: **26.10.2022**
(21) Anmeldenummer: 16791616.2
(22) Anmeldetag: 08.11.2016
(51) Int. Cl.: H01M 4/90, H01M 4/24, H01M 4/42, H01M 10/24, H01M 12/06, B22F 1/16, C22C 1/04

(54) **ZUR HERSTELLUNG EINER ANODE GEEIGNETE METALLPARTIKEL, HERSTELLUNG EINER ANODE, HERGESTELLTE ANODE UND ELEKTROCHEMISCHE ZELLE MIT DER HERGESTELLTEN ANODE**
METAL PARTICLES SUITABLE FOR PRODUCING AN ANODE, PRODUCTION OF AN ANODE, ANODE PRODUCED AND ELECTROCHEMICAL CELL HAVING THE ANODE PRODUCED
PARTICULES MÉTALLIQUES APPROPRIÉES POUR LA PRODUCTION D'UNE ANODE, PRODUCTION D'UNE ANODE, ANODE AINSI PRODUITE ET CELLULE ÉLECTROCHIMIQUE MUNI DE L'ANODE AINSI PRODUITE

(30) Priorität: 03.12.2015 DE 102015224235
(43) Veröffentlichungstag der Anmeldung: 10.10.2018
(73) Patentinhaber: VARTA Microbattery GmbH, 73479 Ellwangen Jagst (DE); Eckart GmbH, 91235 Hartenstein (DE)
(72) Erfinder: WILLERT-PORADA, Monika, 95448 Bayreuth (DE); SCHMID, Manuela, 95445 Bayreuth (DE); SCHADECK, Ulrich, 95447 Bayreuth (DE); SABERI, Ali, 95445 Bayreuth (DE)
(74) Vertreter: Ostertag & Partner Patentanwälte mbB
(86) Internationale Anmeldenummer: PCT/EP2016/077003
(87) Internationale Veröffentlichungsnummer: WO 2017/092981

(56) Entgegenhaltungen:
- US-A- 3 042 732
- US-A- 5 541 021
- US-A1- 2004 185 329
- US-A1- 2010 291 439
- US-A1- 2014 147 757
- US-A1- 2014 227 592
- US-A1- 2015 303 461
- US-B1- 6 461 768

## Beschreibung

Die vorliegend beschriebene Erfindung betrifft zur Herstellung einer Anode geeignete Metallpartikel, die Herstellung einer Anode, die hergestellte Anode und eine elektrochemische Zelle mit der hergestellten Anode.

Zur Speicherung von Energie geeignete elektrochemische Zellen weisen eine positive Elektrode, eine negative Elektrode und einen Separator, der zwischen den Elektroden angeordnet ist, auf. Ferner umfassen sie einen wässrigen Elektrolyten, mit dem die Elektroden getränkt sind und ein flüssigkeitsdicht verschlossenes Gehäuse, in dem die Elektroden, der Separator und der Elektrolyt angeordnet sind.

In solchen Zellen findet eine elektrochemische, energieliefernde Reaktion statt, welche sich aus zwei elektrisch miteinander gekoppelten aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden lonenstrom innerhalb der Zelle. Dieser lonenstrom wird durch einen Ionen leitenden Elektrolyten gewährleistet.

In sekundären (wieder aufladbaren) Zellen ist diese Entladereaktion reversibel, es besteht also die Möglichkeit, die bei der Entladung erfolgte Umwandlung chemischer Energie in elektrische umzukehren. Werden im Zusammenhang mit sekundären Zellen die Begriffe "Anode" und "Kathode" benutzt, benennt man die Elektroden in der Regel entsprechend ihrer Entladefunktion. Die negative Elektrode in solchen Zellen ist also die Anode, die positive Elektrode die Kathode.

Metall-Luft-Zellen enthalten eine metallbasierte Anode und eine sogenannte Luftkathode. Bei der Entladung von Metall-Luft-Zellen wird an der Luftkathode Sauerstoff unter Elektronenaufnahme reduziert. Es entstehen Hydroxidionen, die über einen geeigneten Elektrolyten zur Anode wandern können. Dort wird ein Metall unter Elektronenabgabe oxidiert. Die entstehenden Metallionen reagieren mit den Hydroxidionen ab. Das bekannteste Beispiel einer Metall-Luft-Zelle ist die Zink/Luft-Zelle.

Metall-Luft-Zellen weisen in der Regel besonders hohe Energiedichten auf, weil der Bedarf an Sauerstoff an der Kathode durch Luftsauerstoff aus der Umgebung gedeckt werden kann.

Es sind sowohl primäre als auch sekundäre Metall-Luft-Zellen bekannt. Eine entladene sekundäre Metall-Luft-Zelle wird geladen, indem zwischen Anode und Kathode eine Spannung angelegt und die beschriebene elektrochemische Reaktion umgekehrt wird. Dabei wird Sauerstoff freigesetzt.

Aus der US 2010/0291439 A1 sind Zinkanoden bekannt, die zum Einsatz in sekundären Zink-Zellen vorgesehen sind. Sie bestehen im Wesentlichen aus Zinkpartikeln, die mit Zinn und/oder Blei überzogen sind. Den Zinkanoden können Zusätze wie Bismutoxid oder Zinkoxid zugesetzt sein. Als Elektrolyt für die sekundären Zink-Zellen werden Lösungen von Alkali- und Erdalkalihydroxiden vorgeschlagen.

Aus der US 2015/0303461 A1 sind negative Elektroden bekannt, die Partikel aus Zinkoxid umfassen, die mit einer dünnen Kohlenstoffschicht überzogen sind. Das Zinkoxid kann mit Metallen aus der Gruppe mit Calcium, Magnesium, Barium, Aluminum, Lanthan, Strontium, Zinn, Gallium, Bismut, Antimon und Indium dotiert sein.

Aus der US 2004/0185329 A1 sind Zinkelektroden bekannt, die neben metallischem Zink und Zinkoxid auch eine Kombination aus Indiumhydroxid, Indiumsulfat und Bismutoxid als Gasungsinhibitor und einen Binder umfassen.

Aus der US 3042732 A sind Zinkanoden bekannt, die einen Anteil an Bleioxid enthalten um Gasungsphänomene zu unterdrücken. Zur Herstellung der Anode werden Zink und Bleioxid in einer Kaliumhydroxidlösung miteinander vermischt. Die Mischung wird erwärmt, wobei sich metallisches Blei auf den Zinkpartikeln abscheidet.

Die Praxistauglichkeit sekundärer Metall-Luft-Zellen ist begrenzt. Insbesondere bei Zellen mit Zink-Anoden kommt es oft zu Problemen. Häufig scheiden sich auf der Oberfläche der metallbasierten Anode Oxidschichten mit geringer Ionen- und Elektronenleitfähigkeit ab. Derart passivierte Anoden lassen sich nur schwer laden. Ein Heraufsetzen der Ladespannung ist oft keine Lösung, da Elektrolytzersetzungen die Folge sein können. Zudem kommt es beim Laden von Zink-Anoden regelmäßig zu Dendritenbildungen. Dendriten können interne Kurzschlüsse verursachen, die eine Zelle zerstören.

Derlei Probleme treten nicht nur bei Metall-Luft-Zellen auf. Probleme der genannten Art wurden beispielsweise auch bei Nickel/Zink-Zellen beobachtet.

Als Elektrolyten weisen Metall-Luft-Zellen und auch Nickel/Zink-Zellen üblicherweise eine wässrige alkalische Lösung, meist Natronlauge oder Kalilauge, auf.

Der vorliegenden Erfindung lag die Aufgabe zugrunde, verbesserte sekundäre Zellen, insbesondere verbesserte sekundäre Metall-Luft-Zellen, bereitzustellen. Verbessert werden sollte insbesondere die Zyklisierbarkeit der Zellen.

Gelöst wird diese Aufgabe durch die Metallpartikel mit den Merkmalen des Anspruchs 1, das Verfahren mit den Merkmalen des Anspruchs 9 sowie die Anode mit den Merkmalen des Anspruchs 10. Bevorzugte Ausführungsformen der erfindungsgemäßen Metallpartikel sind in den abhängigen Ansprüchen 2 bis 8 angegeben. Eine bevorzugte Ausführungsform der erfindungsgemäßen Anode ist im abhängigen Anspruch 11 angegeben. Darüber hinaus ist auch die elektrochemische Zelle mit den Merkmalen des Anspruchs 12 von der vorliegenden Erfindung umfasst. Bevorzugte Ausführungsformen der erfindungsgemäßen Zelle sind im abhängigen Anspruch 13 angegeben.

Bei den erfindungsgemäßen Metallpartikeln handelt es sich um beschichtete Metallpartikel. Diese umfassen jeweils einen Metallkern, der aus Zink oder aus einer Zinklegierung besteht, sowie eine Beschichtung.

Sofern der Metallkern aus einer Zinklegierung besteht, so handelt es sich bei dieser bevorzugt um eine Legierung von Zink mit mindestens einem Metall aus der Gruppe mit Indium, Bismut, Blei, Aluminium, Calcium, und Barium.

Bei der Beschichtung kann es sich zum einen um metalloxidhaltige Partikel handeln, die an einer Oberfläche des Metallkerns haften. Zum anderen kann die Beschichtung auch eine metalloxidhaltige Schicht sein, die den Metallkern teilweise oder vollständig umhüllt.

In aller Regel umfassen die metalloxidhaltige Schicht oder die metalloxidhaltigen Partikel stets
- mindestens ein erstes, gegebenenfalls mindestens teilweise hydratisiertes Metalloxid, welches die Wasserstoff-Überspannung an Zink in einem alkalischen Elektrolyten erhöht, und
- mindestens ein zweites, vom ersten verschiedenes, gegebenenfalls mindestens teilweise hydratisiertes Metalloxid, welches mit Wasser eine Lauge bildet.

Unter einem hydratisierten Metalloxid soll vorliegend sowohl eine oxidische Verbindung eines Metalls mit Sauerstoff verstanden werden, welche zumindest nicht ausschließlich aus dem Metall und dem Sauerstoff gebildet ist (also beispielsweise ein Oxyhydroxid, bei dem Sauerstoff auch an einen Wasserstoff geknüpft ist), als auch ein Oxid, das sich in Folge eines Kontakts mit Wasser oder mit einer Lauge vollständig in hydratisierte Metall- und Hydroxidionen zersetzt hat.

Es ist besonders bevorzugt, dass die metalloxidhaltige Schicht oder die metalloxidhaltigen Partikel
- als ein drittes Metalloxid Zinkoxid aufweisen, gegebenenfalls in mindestens teilweise hydratisierter Form.

Enthält die metalloxidhaltige Schicht oder die metalloxidhaltigen Partikel ein drittes Metalloxid, so ist dieses verschieden sowohl von dem ersten als auch von dem zweiten Metalloxid.

Zusätzlich oder alternativ können die erfindungsgemäßen Metallpartikel
- mindestens ein viertes Metalloxid, nämlich insbesondere mindestens ein Mitglied aus der Gruppe mit Siliziumdioxid, Bortrioxid, Phosphorpentoxid, Diarsentrioxid, Germaniumdioxid, Tellurdioxid, Dialuminiumtrioxid, Antimonpentoxid, Polonium(II)-oxid, Zinn(II)-oxid, Cadmiumoxid, Titandioxid, Berylliumoxid, Zirconium(IV)-oxid, Thoriumoxid, Selen(IV)-oxid, Eisen(II)-oxid, Mangan(II)-oxid, Nickel(II)-oxid und Cobalt(II)-oxid
umfassen.

Insbesondere ist es bei weiteren Ausführungsformen bevorzugt, dass die Beschichtung der erfindungsgemäßen Metallpartikel mindestens ein gegebenenfalls mindestens teilweise hydratisiertes Metalloxid umfasst, dass als Netzwerkbildner fungiert. Beispielsweise kann dieses Metalloxid ausgewählt werden aus der Gruppe bestehend aus Siliziumoxid, Bortrioxid, Phosphorpentoxid, Bismutoxid, Zinkoxid, Bleioxid und Aluminiumoxid. Die vorgenannten Metalloxide können hierbei eines der vorgenannt spezifizierten Metalloxide darstellen.

Die erfindungsgemäßen Metallpartikel können als viertes Metalloxid auch Magnesiumoxid und/oder Aluminiumoxid aufweisen.

Enthält die metalloxidhaltige Schicht oder die metalloxidhaltigen Partikel ein viertes Metalloxid, so ist dieses verschieden sowohl von dem ersten als auch von dem zweiten als auch von dem dritten Metalloxid.

Bei dem mindestens einen ersten Metalloxid handelt es sich bevorzugt um mindestens ein Mitglied aus der Gruppe mit Bleioxid, Indiumoxid und Bismutoxid. Besonders bevorzugt ist das mindestens eine erste Metalloxid Bismutoxid.

Hinsichtlich des zweiten Metalloxids ist bevorzugt ein Metalloxid gemeint, welches mit Wasser bei einer Temperatur von 25 °C und einem pH von 7 im Brönstedt'schen Sinn eine Lauge bildet.

Bei dem mindestens einen zweiten Metalloxid handelt es sich bevorzugt um mindestens ein Alkali- und/oder Erdalkalioxid, insbesondere um mindestens ein Mitglied aus der Gruppe mit Calciumoxid, Bariumoxid, Lithiumoxid, Natriumoxid und Kaliumoxid. Besonders bevorzugt ist das mindestens eine zweite Metalloxid Calciumoxid.

In einer ersten, besonders bevorzugten Ausführungsform bestehen die metalloxidhaltigen Partikel oder die metalloxidhaltige Schicht aus einer erkalteten amorphen Schmelze, insbesondere einer glasartigen Schmelze. Zwecks Erhalts einer solchen Schmelze kann man die genannten Oxide miteinander verschmelzen und beispielsweise die Schmelze in Wasser abschrecken. Die abgeschreckte Schmelze lässt sich durch einen Mahlvorgang zerkleinern.

Zur Bereitstellung der erfindungsgemäßen Metallpartikel können die dabei erhaltenen Partikel mit als Metallkernen dienenden Zinkpartikeln oder Zinklegierungspartikeln intensiv vermengt werden, so dass sie an deren Oberfläche anhaften.

Vorzugsweise erfolgt diese Vermengung mittels Prozessen welche zum Vermahlen oder Aufpolieren genutzt werden. Beispiele einsetzbarer Aggregate hierfür sind Kugelmühlen oder Rührwerkskugelmühlen. Hierbei werden die Parameter vorzugsweise derart gewählt, dass eine Zerkleinerung der Partikel der amorphen Schmelze und Verformung der Zinkpartikel bzw. Zinklegierungspartikel minimal ist. Bevorzugt werden die Parameter derart gewählt, dass die mittlere Partikelgröße (d₅₀) der amorphen Schmelze bei der Vermengung um maximal 10 % abnimmt. Die Bestimmung der mittleren Partikelgröße erfolgt vorzugsweise analog der Bestimmung der mittleren Partikelgröße der Metallkerne. Sofern der hierbei gemessene Wert jedoch geringer als 0,5 µm ist, wird bevorzugt ein Verfahren wie beispielsweise REM (Rasterelektronenmikroskopie) eingesetzt.

In aller Regel liegt die mittlere Partikelgröße (d₅₀) der als Metallkerne dienenden Partikel um mindestens den Faktor 6, bevorzugt um mindestens den Faktor 9, besonders bevorzugt um mindestens den Faktor 13, über der mittleren Partikelgröße der eingesetzten Partikel aus der erkalteten amorphen Schmelze. Beispielsweise bei erkalteten amorphen Schmelzen, deren Aufquellvorgang sehr langsam abläuft, ist es ferner bevorzugt, dass der vorgenannte Faktor mindestens 20, mehr bevorzugt mindestens 30, beträgt.

Ferner ist es typischerweise vorteilhaft, wenn die mittlere Partikelgröße (d₅₀) der als Metallkerne dienenden Partikel um höchstens den Faktor 1500, mehr bevorzugt um höchstens den Faktor 1000, über der mittleren Partikelgröße der eingesetzten Partikel aus der erkalteten amorphen Schmelze liegt.

Vorzugsweise liegt das Verhältnis der mittleren Partikelgröße (d₅₀) der als Metallkerne dienenden Partikel zur mittleren Partikelgröße der eingesetzten Partikel aus der erkalteten amorphen Schmelze im Bereich von 6 bis 1500, mehr bevorzugt im Bereich von 9 bis 1500, noch mehr bevorzugt im Bereich von 13 bis 1500.

Die mittlere Partikelgröße der metalloxidhaltigen Partikel kann hierbei sehr gering sein, liegt jedoch vorzugsweise bei mindestens 5 nm, mehr bevorzugt bei mindestens 50 nm, noch mehr bevorzugt bei mindestens 100 nm.

Ferner wurde beobachtet, dass die Obergrenze der metalloxidhaltigen Partikeln vorteilhafterweise höchstens 90 µm, mehr bevorzugt höchstens 75 µm, noch mehr bevorzugt höchstens 60 µm beträgt. Diese Partikel erwiesen sich unter gebräuchlichen Bedingungen als leichter prozessierbar und sollten insbesondere eine gute Umsetzbarkeit auf bestehenden Anlagen aufweisen.

Bei weiteren Ausführungsformen ist es bevorzugt, dass die mittlere Partikelgröße (d₅₀) im Bereich von 5 nm bis 90 µm, bevorzugt im Bereich von 50 nm µm bis 75 µm, noch mehr bevorzugt im Bereich von 100 nm bis 60 µm, beträgt.

Es wird vermutet, dass die hierbei erhaltenen Ergebnisse auf eine im Wesentlichen rein oberflächliche Aufbringung der Partikel aus der amorphen Schmelze auf der Oberfläche der bereitgestellten Metallkerne zurückzuführen sind. Zu intensive Vermengungsprozesse können nämlich zu einer Art der mechanischen Legierung führen. Wie weiter unten noch ausführlicher beschrieben ist, kann die amorphe Schmelze bei Kontakt mit Wasser oder alkalischer Lösung aufquellen und dabei vorteilhafterweise eine Matrix ausbilden, in welche die Metallkerne eingelagert sind In Folge einer solchen mechanischen Legierung steht gegebenenfalls weniger der amorphen Schmelze zur Bildung der Matrix zur Verfügung, während gleichzeitig der aktive Metallgehalt der Partikel bei gleichbleibender Menge der Matrix sinkt.

Gemäß dieser Vorgehensweise erhaltene erfindungsgemäße Metallpartikel weisen in der Regel einen Metallkern auf, an dessen Oberfläche zahlreiche vergleichsweise kleinere der metalloxidhaltigen Partikel anhaften. Die metalloxidhaltigen Partikel können vereinzelt an der Oberfläche des Metallkerns haften, sie können gegebenenfalls aber auch eine nahezu geschlossene Hülle ausbilden.

Aufgrund der kostengünstigen Ausgangsstoffe (geeignete glasartige Schmelzen sind wie Partikel aus Zink, Magnesium, Aluminium oder einer Legierungen dieser Metalle in der Regel kostengünstig erhältlich) ist die Route gemäß der ersten, besonders bevorzugten Ausführungsform insbesondere zur preisgünstigen Herstellung großer Mengen der erfindungsgemäßen Partikel einsetzbar.

In einer zweiten, besonders bevorzugten Ausführungsform werden die metalloxidhaltigen Partikel oder die metalloxidhaltige Schicht mittels eines Sol-Gel-Prozesses erhalten. Hierbei werden Mischungen chemischer Verbindungen wie Metallalkoholate umgesetzt, welche unter Freisetzung reaktiver Grundbausteine ein Metalloxidnetzwerk aufbauen. Beispielsweise kann unter Einsatz von Tetramethylorthosilikat (TMOS) oder Tetraethylorthosilikat (TEOS) eine Siliciumoxidschicht aufgebaut werden. Mittels Variation der Reaktionspartner können durch den Sol-Gel-Prozess verschiedenste Arten von Beschichtungen aufgebaut werden, welche sich schnell und flexibel realisieren lassen. Nach dem Aufbringen der Metalloxidschicht kann diese wiederum getrocknet werden.

Die erfindungsgemäßen beschichteten Metallpartikel umfassen bevorzugt einen Anteil an den Metalloxiden im Bereich von 0,1 Gew.-% bis 25 Gew.-%, bevorzugt im Bereich von 0,5 Gew.-% bis 10 Gew.-%, jeweils bezogen auf das Gesamtgewicht der beschichteten Metallpartikel ohne Wasser. Besonders bevorzugt kann die Untergrenze der genannten Bereiche auch 1,5 Gew.-% oder 2,5 Gew.-% betragen.

Das Zink oder die Zinklegierung ist in den beschichteten Metallpartikeln bevorzugt in einem Anteil im Bereich von 75 Gew.-% bis 99,9 Gew.-% enthalten, besonders bevorzugt in einem Anteil im Bereich von 90 Gew.-% bis 99,5 Gew.-%, jeweils bezogen auf das Gesamtgewicht der beschichteten Metallpartikel ohne Wasser.

Ferner ist es bei weiteren Ausführungsformen bevorzugt, dass die metalloxidhaltigen Partikel oder die metalloxidhaltige Schicht zu mindestens 80 Gew.-%, mehr bevorzugt zu mindestens 85 Gew.-%, noch mehr bevorzugt zu mindestens 95 Gew.-%, aus Metalloxiden bestehen, jeweils bezogen auf das Gewicht der metalloxidhaltigen Partikel oder der metalloxidhaltigen Schicht ohne Wasser. Insbesondere ist es bei weiteren Ausführungsformen der vorliegenden Erfindung bevorzugt, dass die metalloxidhaltigen Partikel oder die metalloxidhaltige Schicht zu mindestens 99,9 Gew.-% aus Metalloxiden bestehen, jeweils bezogen auf das Gewicht der metalloxidhaltigen Partikel oder der metalloxidhaltigen Schicht ohne Wasser.

Besonders bevorzugt weisen die metalloxidhaltigen Partikel oder die metalloxidhaltige Schicht
- einen Anteil von 25 Gew.-% bis 85 Gew.-% an dem mindestens einen ersten Metalloxid und/oder
- einen Anteil von 5 Gew.-% bis 60 Gew.-% an dem mindestens einen zweiten Metalloxid und/oder
- einen Anteil von 5 Gew.-% bis 45 Gew.-% an dem dritten Metalloxid
   und/oder
- einen Anteil von 10 Gew.-% bis 45 Gew.-% an dem mindestens einen vierten Metalloxid
auf, jeweils bezogen auf das Gewicht der metalloxidhaltigen Partikel oder der metalloxidhaltigen Schicht ohne Wasser.

Die angegebenen Gewichtsanteile sind jeweils bezogen auf das Gesamtgewicht der metalloxidhaltigen Partikel oder der metalloxidhaltigen Schicht. Naturgemäß kann die Summe der vorgenannten Gewichtsanteile in den Partikeln oder in der metalloxidhaltigen Schicht 100 Gew.-% nicht übersteigen.

Die Bestimmung des Gewichtsanteils des Metalloxids in der Beschichtung erfolgt bevorzugt durch Bestimmung der Gesamtmenge des enthaltenen oxidierten Metalls auch in der Form von beispielsweise Hydroxiden, Oxidhydraten, etc. mithilfe dem Fachmann geläufiger Verfahren. Beispiele hierfür sind Atomabsorptionsspektroskopie, Elementaranalyse, induktiv gekoppeltes Plasma mit Atomemmisionsspektroskopie (ICP-AES / Inductively coupled plasma atomic emission spectroscopy) und insbesondere Kombinationen solcher Verfahren. Die Berechnung des Wertes erfolgt über die entsprechende Menge an Metall. Sofern die Bestimmung des genauen Metalls oder der in einer Metalloxid enthaltenen Mischung nicht mithilfe dem Fachmann geläufiger Verfahren wie beispielsweise XPS erfolgen kann, wird das höchstoxidierte unter Normbedingungen stabile Oxid des Metalls als Referenz genommen. Normbedingungen im Sinne der vorliegenden Erfindung sind eine Temperatur von 0 °C und ein Druck von 1,01325 bar. Beispielsweise wird für Siliziumoxid SiO₂ als Referenz angenommen. Die Bestimmung des Gesamtgewichts der Metallpartikel oder der metalloxidhaltigen Schicht erfolgt an getrockneten Proben. Beispielsweise werden diese Proben hierzu bei 50 °C und 10 mbar getrocknet bis Gewichtskonstanz erreicht ist.

Ferner ist es bei weiteren Ausführungsformen bevorzugt, dass die Metallkerne einen Zinkgehalt von mindestens 70 Gew.-%, mehr bevorzugt von mindestens 85 Gew.-%, noch mehr bevorzugt von mindestens 95 Gew.-%, aufweisen, jeweils bezogen auf das Gesamtgewicht der Metallkerne ohne Sauerstoff.

Hinsichtlich der Partikelgröße wurde beobachtet, dass die erfindungsgemäß einzusetzenden Metallkerne für beispielsweise Batterieanwendungen vorzugsweise eine mittlere Partikelgröße (d₅₀) von höchstens 500 µm, mehr bevorzugt höchstens 450 µm, noch mehr bevorzugt höchstens 400 µm aufweisen.

Der bereits mehrfach erwähnte d-Wert ist eine dem Fachmann gebräuchliche Größe zur Charakterisierung von derartigen Partikeln. Die jeweilig angegebene Zahl gibt hierbei an, wieviel % der Partikel in einer volumengemittelten Partikelgrößenverteilung unterhalb einer angegebenen Größe liegen. Beispielsweise gibt der d₅₀-Wert an, unter welcher Größe 50% der Partikel liegen.

Partikelgrößenmessungen werden vorzugsweise mit dem Partikelgrößenanalysator HELOS der Fa. Sympatec GmbH, Clausthal-Zellerfeld, Deutschland, durchgeführt. Die Dispergierung eines trockenen Pulvers kann hierbei mit einer Dispergiereinheit vom Typ Rodos T4.1 bei einem Primärdruck von beispielsweise 4 bar erfolgen. Alternativ kann die Größenverteilungskurve der Partikel beispielsweise mit einem Gerät der Fa. Quantachrome (Gerät: Cilas 1064) gemäß Herstellerangaben vermessen werden. Hierzu werden 1,5 g des pulverförmigen Beschichtungsmaterials oder Paste mit einem Feststoffgehalt von 1,5 g in ca. 100 ml Ethanol dispergiert, 300 Sekunden in einem Ultraschallbad (Gerät: Sonorex IK 52, Fa. Bandelin) behandelt und anschließend mittels einer Pasteurpipette in die Probenvorbereitungszelle des Messgerätes gegeben und mehrmals vermessen. Aus den einzelnen Messergebnissen werden die resultierenden Mittelwerte gebildet. Die Auswertung der Streulichtsignale erfolgt dabei nach der Fraunhofer Methode.

Ferner ist es bei weiteren Ausführungsformen bevorzugt, dass die Untergrenze der mittleren Partikelgröße (d₅₀) mindestens 5 µm, mehr bevorzugt mindestens 50 µm, noch mehr bevorzugt mindestens 100 µm beträgt.

Bevorzugt weisen die als Metallkerne dienenden Metallpartikel, insbesondere Zinkpartikel, eine mittlere Partikelgröße (d₅₀) im Bereich von 5 bis 500 µm, mehr bevorzugt im Bereich von 50 µm bis 500 µm, noch mehr bevorzugt im Bereich von 50 µm bis 400 µm, auf.

Die erfindungsgemäßen beschichteten Metallpartikel weisen bei weiteren Ausführungsformen bevorzugt eine mittlere Partikelgröße (d₅₀) von mindestens 6 µm, mehr bevorzugt mindestens 55 µm, noch mehr bevorzugt mindestens 105 µm auf.

Ferner liegt bei weiteren Ausführungsformen die Obergrenze der mittleren Partikelgröße (d₅₀) der beschichteten Metallpartikel bei weiteren Ausführungsformen vorzugsweise bei höchstens 600 µm, mehr bevorzugt bei höchstens 500 µm, noch mehr bevorzugt bei höchstens 460 µm.

Vorzugsweise liegt die mittlere Partikelgröße (d₅₀) der erfindungsgemäßen beschichteten Metallpartikel typischerweise im Bereich von 6 µm bis 600 µm, mehr bevorzugt im Bereich von 55 µm bis 500 µm, noch mehr bevorzugt im Bereich von 105 µm bis 460 µm.

Der Begriff "Zinkpartikel" im Sinne der vorliegenden Erfindung bezeichnet bevorzugt Metallkerne, welche zu mindestens 99 Gew.-% aus Zink bestehen, bezogen auf das Gesamtgewicht des Metallkerne ohne Sauerstoff. Der Begriff "Zinklegierungspartikel" im Sinne der vorliegenden Erfindung bezeichnet bevorzugt Metallkerne, deren Zinkgehalt im Bereich von 50 Gew.-% bis weniger als 99 Gew.-% liegt, bezogen auf das Gesamtgewicht des Metallkerne ohne Sauerstoff.

Insbesondere ist es bei weiteren Ausführungsformen bevorzugt, dass der Anteil an Zink in den Zinkpartikeln und Zinklegierungspartikeln im Bereich von 75 Gew.-% bis 99,9 Gew.-%, besonders bevorzugt im Bereich von 90 Gew.-% bis 99,5 Gew.-%, liegt, bezogen auf das Gesamtgewicht des Metallkerne ohne Sauerstoff.

Bevorzugt haben die Metallkerne einen Eisengehalt von maximal 500 ppm, bevorzugt von maximal 50 ppm, insbesondere von maximal 5 ppm. Besonders bevorzugt sind die Metallkerne frei von Eisen.

Die erfindungsgemäßen beschichteten Metallpartikel eignen sich hervorragend zur Herstellung einer elektrochemischen Zelle, insbesondere zur Herstellung einer Anode für eine elektrochemische Zelle.

Zur Herstellung der Anode werden die Metallpartikel als Elektrodenmaterial verarbeitet und mit Wasser oder mit einer wässrigen alkalischen Lösung, insbesondere einem für eine elektrochemische Zelle geeigneten alkalischen Elektrolyten, versetzt.

Eine unter Verwendung der beschriebenen Metallpartikel bzw. gemäß diesem Verfahren herstellbare Anode enthält
- Metallkerne aus Zink oder aus einer Zinklegierung,
- einen Hydroxyionen und solvatisierte Metallionen enthaltenden alkalischen Elektrolyten und
- eine gelartige Masse, die das mindestens eine erste und das mindestens eine zweite Metalloxid, gegebenenfalls auch das mindestens eine dritte und/oder das mindestens eine vierte Metalloxid, umfasst.

Die Metallkerne aus dem Zink oder aus der Zinklegierung stehen in unmittelbarem Kontakt mit der gelartigen Masse.

Die gelartige Masse entsteht beispielsweise in Folge des Versetzens der Metallpartikel mit dem Wasser oder der wässrigen alkalischen Lösung. Bei Anwesenheit der erwähnten erkalteten amorphen Schmelze quillt diese dabei bevorzugt auf. Bei diesem Vorgang hydratisiert in der Regel zumindest das mindestens eine zweite Metalloxid, insbesondere bis es ausschließlich in Form hydratisierter Hydroxy- und Metallionen vorliegt. Ferner kann eine bereits gelartige Struktur beispielsweise infolge der Sol-Gel-Beschichtung vorliegen, welche gegebenenfalls lediglich durch den Zusatz von Wasser weiter aufquillt.

Zudem können beispielsweise weitere Partikel der amorphen Schmelze den erfindungsgemäßen Metallpartikeln vor der Hydratisierung zugesetzt werden. Oder das Anodenmaterial wird unter Einsatz der erfindungsgemäßen beschichteten Metallpigmente und einer Sol-Gel-Reaktion erhalten. Hierdurch wird beispielsweise eine einfache Modifikationsmöglichkeit des Anodenmaterials bei identischen Metallpartikeln erhalten, jedoch verringert sich naturgemäß gleichzeitig der Gehalt an aktivem Metall.

Es ist bevorzugt, dass die gelartige Masse, gegebenenfalls zusammen mit einem Elektrodenbinder, entweder eine Matrix bildet, in welche die Metallpartikel eingelagert sind, oder die Zwischenräume zwischen den Metallpartikeln ausfüllen. Besonders bevorzugt bildet die gelartige Masse eine Hülle, welche die Partikel aus Zink oder aus einer Zinklegierung umgibt.

In einigen besonders bevorzugten Ausführungsformen liegen das erste und/oder das vierte mindestens eine Metalloxid und/oder das dritte Metalloxid zumindest teilweise nicht hydratisiert vor. Die gelartige Masse weist dann also hydratisierte und nicht hydratisierte oxidische Bestandteile auf.

Die Anode zeichnet sich besonders dadurch aus, dass die matrixbildenden Metalloxide (das mindestens eine erste und das mindestens eine zweite Metalloxid, gegebenenfalls auch das dritte und/oder das mindestens eine vierte Metalloxid) auf molekularer Ebene in homogener Verteilung vorliegen. Diese Verteilung resultiert daraus, dass die gelartige Masse aus einer glasartigen Schmelze oder aus einem Sol gebildet wird, in der oder in dem die homogene Verteilung bereits vorgegeben ist.

Die Anode kann bei Bedarf
- ein Additiv zur Erhöhung der elektrischen Leitfähigkeit, insbesondere Graphit oder Leitruss, und/oder
- einen Elektrodenbinder, insbesondere einen wässrig prozessierbaren Elektrodenbinder, und/oder
- einen organischen Gasungsinhibitor, insbesondere aus der Gruppe mit Tolyltriazol und Benzotriazol,
aufweisen.

Jede elektrochemische Zelle, insbesondere jede sekundäre elektrochemische Zelle, die die beschriebene Anode umfasst, ist Gegenstand der vorliegenden Erfindung.

Elektrochemische Zellen nach der Erfindung können eine Braunsteinkathode, eine Luftkathode, eine Silber(I)-oxid-Kathode oder eine Quecksilberoxidkathode aufweisen. Besonders bevorzugt handelt es sich bei den elektrochemischen Zellen gemäß der Erfindung um Zink/Luft-Zellen.

Weitere Merkmale der Erfindung ergeben sich aus der nun folgenden Beschreibung bevorzugter Ausführungsformen in Verbindung mit den Unteransprüchen. Hierbei können einzelne Merkmale jeweils für sich oder zu mehreren in Kombination miteinander einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

### (A) Herstellung glasartiger Schmelzen zwecks anschließender Beschichtung von Metallkernen

Es wurden Gläser aus den Zusammensetzungen (1) bis (14) erschmolzen:

| | Bi₂O₃ | CaO | ZnO | SiO₂ | P₂O₅ | Al₂O₃ | Na₂O |
|---|---|---|---|---|---|---|---|
| (1) | 29.8 | 50.5 | 19.7 | | | | |
| (2) | 40 | 40 | 20 | | | | |
| (3) | 40 | 35 | 25 | | | | |
| (4) | 38.5 | 33.5 | 23.5 | | | 4.5 | |
| (5) | 30 | | 30 | 40 | | | |
| (6) | 45 | | 20 | 35 | | | |
| (7) | 31.57 | | 31.67 | 36.76 | | | |
| (8) | 27.73 | | 39.74 | | 32.53 | | |
| (9) | 75.81 | 15.44 | 8.75 | | | | |
| (10) | 82.82 | 9.95 | 7.23 | | | | |
| (11) | 82.35 | 8.66 | 8.99 | | | | |
| (12) | 30 | | 30 | 40 | | | |
| (13) | 74.28 | | 12.97 | 12.75 | | | |
| (14) | 11.7 | | | | | 19.9 | 68.4 |

Nach Abkühlen der Schmelzen wurden die erkalteten Schmelzen zu Pulvern vermahlen. Die so erhaltenen Pulver eignen sich sämtlich zur Bildung von Beschichtungen auf Metallkernen zwecks Herstellung erfindungsgemäßer Metallpartikel. Zur Herstellung beschichteter Zinkpartikel eignen sich insbesondere die aus den Zusammensetzungen (1) bis (8) erhaltenen Schmelzen. Die aus Zusammensetzung (3) erhaltene Schmelze bzw. das daraus erhaltene Pulver wurde näher untersucht.

Quellfähigkeit der aus Zusammensetzung (3) erhaltenen Schmelze:
Mit Hilfe eines elektrochemischen Dilatometers (EI-Cell) wurde die Quellfähigkeit der Schmelze in 6M KOH untersucht. Nach 60h trat eine Ausdehnung von etwa 9.5 µm auf.

### (B) Herstellung beschichteter Metallpartikel durch intensives Vermengen (Aufpolieren)

97,8 Gewichtsteile eines Zinkpulvers mit einer mittleren Partikelgröße (d₅₀) von 250 µm wurden mit 2,2 Gewichtsteilen einer aus Zusammensetzung (3) erhaltenen erkalteten Schmelze intensiv in einer Kugelmühle vermahlen (Aufpolierung). Das so erhaltene Kompositmaterial lässt sich unmittelbar als Aktivmaterial einer negativen Elektrode verwenden.

### (C) Herstellung beschichteter Metallpartikel durch einen Sinterprozess

Aus einer Pulvermischung bestehend aus 85 Gewichtsteilen Zinkpulver (mittlere Partikelgröße (d₅₀) von 250 µm) und 15 Gewichtsteilen einer aus Zusammensetzung (3) erhaltenen erkalteten Schmelze (mittlere Partikelgröße (d₅₀) von < 63 µm) wurde ein Pressling hergestellt. Der Pressdruck betrug 377 MPa, der Durchmesser des Pellets 13 mm. Anschließend wurde der Pressling in einem Rohrofen bei 300 °C für 12 h unter Argonatmosphäre gesintert. Das so erhaltene Kompositmaterial lässt sich unmittelbar als Aktivmaterial einer negativen Elektrode verwenden.

### (D) Eignung als Elektrodenmaterial

Bei der Untersuchung der Eignung gemäß (B) und (C) hergestellter Kompositmaterialien wurde bei einer Halbzellenmessung (Pt-Gegenelektrode, Ag/AgCl-Referenzelektrode, 6 M KOH) eine Zyklenstabilität von über 25 Zyklen beobachtet. In Tabelle 1 sind die beobachteten Parameter Zyklenstabilität, Aktivmaterialausnutzung (AM-Ausnutzung) und Coulombsche Effizienz von Anodenmaterialien aufgeführt.

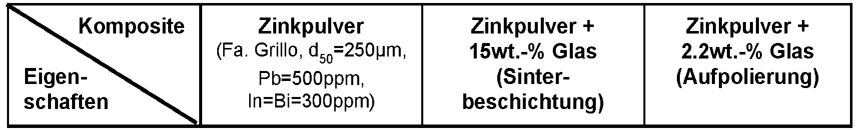

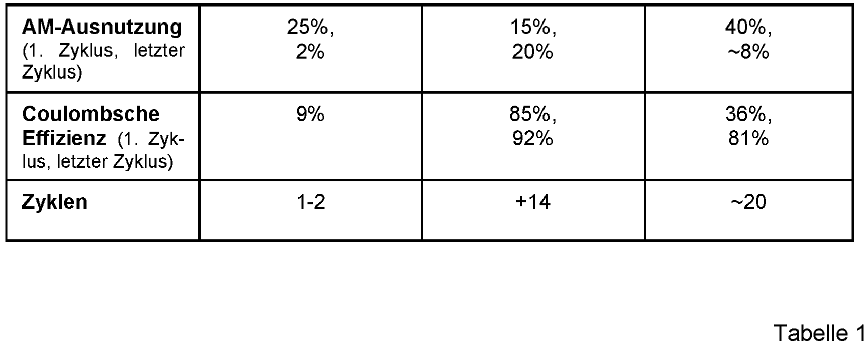

Fig. 1 zeigt die beobachteten Verläufe der Zyklenstabilitäten und Fig. 2 die Zellinnenwiderstände bei unterschiedlichen Ladezuständen. Die Zunahme des Innenwiderstandes einer Halbzelle ohne Additivzugabe zur Anode ist wesentlich höher als es bei Glaszugabe der Fall ist.

Anhand des Röntgenbeugungsspektrums in Fig. 3 ist zu erkennen, dass sich nach der Zyklierung Bi-Metall gebildet hat. Durch die halbleitenden Eigenschaften des Bismutoxids bzw. durch Bi-Bildung kann gegebenenfalls die erhöhte Leitfähigkeit und folglich verringerte Passivierung und erhöhte Reversibilität des beschichteten Zinkpulvers erklärt werden.

### (E) Herstellung beschichteter Metallpartikel mittels Sol-Gel-Verfahren

100 g eines Zinkpulver (d₅₀ = 250 µm) wurden in 200 g Isopropanol und 1 g Disperbyk 192 dispergiert. Nachfolgend wurden Lösung A (2,9 g Bismutoxid, 1,0 g Calciumacetat, 0,8 g Zinkacetat, 0,3 g Aluminiumacetat und 95 g 60 %-iger Essigsäure) und Lösung B (100 g 1%-ige Ammoniaklösung) zugegeben. Nach 4 h wurde das erhaltene Metallpulver isoliert, gewaschen und als Paste isoliert. Das so erhaltene Kompositmaterial wurde untersucht.

## Patentansprüche

1. Beschichtete Metallpartikel zur Verwendung in einer Anode einer elektrochemischen Zelle, umfassend einen Metallkern, der aus Zink oder aus einer Zinklegierung besteht, und eine Beschichtung, wobei die Beschichtung ausgewählt ist aus metalloxidhaltigen Partikeln, die an einer Oberfläche des Metallkerns haften, oder einer den Metallkern umhüllenden metalloxidhaltigen Schicht und wobei die metalloxidhaltige Schicht oder die metalloxidhaltigen Partikel
• mindestens ein erstes Metalloxid, welches die Wasserstoff-Überspannung an Zink in einem alkalischen Elektrolyten erhöht, und
• mindestens ein zweites, vom ersten verschiedenes Metalloxid, welches mit Wasser eine Lauge bildet,
umfassen.

2. Metallpartikel nach Anspruch 1, **dadurch gekennzeichnet, dass** die metalloxidhaltige Schicht oder die metalloxidhaltigen Partikel
• als ein drittes, von dem ersten und dem zweiten verschiedenes Metalloxid Zinkoxid, und/oder
• als mindestens ein viertes Metalloxid mindestens ein Mitglied aus der Gruppe mit Siliziumdioxid, Bortrioxid, Phosphorpentoxid, Diarsentrioxid, Germaniumdioxid, Antimonpentoxid, Polonium(II)-oxid, Zinn(II)-oxid, Cadmiumoxid, Titandioxid, Berylliumoxid, Zirconium(IV)-oxid, Thoriumoxid, Selen(IV)-oxid, Eisen(II)-oxid, Mangan(II)-oxid, Nickel(II)-oxid, Cobalt(II)-oxid, Magnesiumoxid und Aluminiumoxid umfassen.

3. Metallpartikel nach Anspruch 1 oder Anspruch 2, **dadurch gekennzeichnet, dass**
• das mindestens eine erste Metalloxid mindestens ein Mitglied aus der Gruppe mit Bleioxid, Indiumoxid und Bismutoxid
und/oder
• das mindestens eine zweite Metalloxid mindestens ein Alkali- und/oder Erdalkalioxid umfasst.

4. Metallpartikel nach einem der vorhergehenden Ansprüche, **dadurch gekennzeichnet, dass** die metalloxidhaltigen Partikel oder die metalloxidhaltige Schicht
• aus einer erkalteten amorphen Schmelze bestehen
oder
• mittels Trocknen aus einem Sol erhalten wurden.

5. Metallpartikel nach Anspruch 4, **dadurch gekennzeichnet, dass** die mittlere Partikelgröße (d₅₀) der als Metallkerne dienenden Partikel um mindestens den Faktor 6 über der mittleren Partikelgröße der eingesetzten Partikel aus der erkalteten amorphen Schmelze liegt.

6. Metallpartikel nach einem der vorhergehenden Ansprüche, **dadurch gekennzeichnet, dass** die Beschichtung der erfindungsgemäßen Metallpartikel mindestens ein Metalloxid umfasst, wobei dieses Metalloxid ausgewählt ist aus der Gruppe bestehend aus Siliziumoxid, Bortrioxid, Phosphorpentoxid, Bismutoxid, Zinkoxid, Bleioxid und Aluminiumoxid.

7. Metallpartikel nach einem der vorhergehenden Ansprüche, **dadurch gekennzeichnet, dass** die metalloxidhaltigen Partikel oder die metalloxidhaltige Schicht
• zu mindestens 80 Gew.-% aus den Metalloxiden bestehen
und/oder
• einen Anteil von 25 Gew.-% bis 85Gew.-% an dem mindestens einen ersten Metalloxid
und/oder
• einen Anteil von 5 Gew.-% bis 60 Gew.-% an dem mindestens einen zweiten Metalloxid
und/oder
• einen Anteil von 5 Gew.-% bis 45 Gew.-% an dem dritten Metalloxid und/oder
• einen Anteil von 10 Gew.-% bis 45 Gew.-% an dem mindestens einen vierten Metalloxid
aufweisen, jeweils bezogen auf das Gewicht der metalloxidhaltigen Partikel oder der metalloxidhaltigen Schicht ohne Wasser.

8. Metallpartikel nach einem der vorhergehenden Ansprüche, **dadurch gekennzeichnet, dass** sie das Zink oder die Zinklegierung in einem Anteil von 75 bis 99,9 Gew.-% aufweisen.

9. Verfahren zur Herstellung einer Anode, bei dem Metallpartikel nach einem der vorhergehenden Ansprüche mit Wasser oder mit einer wässrigen alkalischen Lösung versetzt werden.

10. Anode, hergestellt unter Verwendung von Partikeln mit den Merkmalen der Ansprüche 1 und 4, enthaltend
• Metallpartikel aus Zink oder aus einer Zinklegierung,
• einen Hydroxyionen und solvatisierte Metallionen enthaltenden alkalischen Elektrolyten und
• eine gelartige Masse, die das mindestens eine erste und das mindestens eine zweite Metalloxid gemäß Anspruch 1 umfasst,
wobei zumindest das mindestens eine zweite Metalloxid hydratisiert vorliegt und die Metallpartikel aus dem Zink oder aus der Zinklegierung in unmittelbarem Kontakt mit der gelartigen Masse stehen und die gelartige Masse eine Matrix bildet, in welche die Metallpartikel eingelagert sind, wobei die matrixbildenden Metalloxide sich durch eine homogene Durchmischung auf molekularer Ebene auszeichnen.

11. Anode nach Anspruch 10, **dadurch gekennzeichnet, dass** das erste und/oder das vierte mindestens eine Metalloxid und/oder das dritte Metalloxid zumindest teilweise nicht hydratisiert vorliegen.

12. Elektrochemische Zelle, umfassend eine Anode nach einem der vorhergehenden Ansprüche.

13. Zelle nach Anspruch 12, **dadurch gekennzeichnet, dass** sie eine Braunsteinkathode, eine Luftkathode, eine Silber(I)-oxid-Kathode oder eine Quecksilberoxidkathode aufweist.

## Claims

1. Coated metal particles for use in an anode of an electrochemical cell, comprising a metal core, which consists of zinc or a zinc alloy, and a coating, where the coating is selected from metal oxide-containing particles, which adhere on a surface of the metal core, or of a metal oxide-containing layer enveloping the metal core, and where the metal oxide-containing layer or the metal oxide-containing particles comprise
• at least one first metal oxide, which increases the hydrogen overvoltage on zinc in an alkaline electrolyte, and
• at least one second metal oxide, different from the first, which forms an alkali with water.

2. Metal particles according to Claim 1, **characterized in that** the metal oxide-containing layer or the metal oxide-containing particles comprise
• as a third metal oxide, different from the first and second, zinc oxide,
and/or
• as at least one fourth metal oxide, at least one member from the group with silicon dioxide, boron trioxide, phosphorus pentoxide, diarsenic trioxide, germanium dioxide, antimony pentoxide, polonium(II) oxide, tin(II) oxide, cadmium oxide, titanium dioxide, beryllium oxide, zirconium(IV) oxide, thorium oxide, selenium(IV) oxide, iron(II) oxide, manganese(II) oxide, nickel(II) oxide, cobalt(II) oxide, magnesium oxide and aluminium oxide.

3. Metal particles according to Claim 1 or Claim 2, **characterized in that**
• the at least one first metal oxide comprises at least one member from the group with lead oxide, indium oxide and bismuth oxide
and/or
• the at least one second metal oxide comprises at least one alkali metal oxide and/or alkaline earth metal oxide.

4. Metal particles according to any of the preceding claims, **characterized in that** the metal oxide-containing particles or the metal oxide-containing layer
• consist of a cooled amorphous melt
or
• have been obtained by drying from a sol.

5. Metal particles according to Claim 4, **characterized in that** the mean particle size (d₅₀) of the particles serving as metal cores is above, by a factor of at least 6, the mean particle size of the particles used from the cooled amorphous melt.

6. Metal particles according to any of the preceding claims, **characterized in that** the coating of the metal particles of the invention comprises at least metal oxide, where this metal oxide is selected from the group consisting of silicon oxide, boron trioxide, phosphorus pentoxide, bismuth oxide, zinc oxide, lead oxide and aluminium oxide.

7. Metal particles according to any of the preceding claims, **characterized in that** the metal oxide-containing particles or the metal oxide-containing layer
• consist at least 80 wt% of the metal oxides and/or
• comprise a fraction of 25 wt% to 85 wt% of the at least one first metal oxide
and/or
• comprise a fraction of 5 wt% to 60 wt% of the at least one second metal oxide
and/or
• comprise a fraction of 5 wt% to 45 wt% of the third metal oxide
and/or
• comprise a fraction of 10 wt% to 45 wt% of the at least one fourth metal oxide,
based in each case on the weight of the metal oxide-containing particles or of the metal oxide-containing layer without water.

8. Metal particles according to any of the preceding claims, **characterized in that** they comprise the zinc or the zinc alloy in a fraction of 75 to 99.9 wt%.

9. Method for producing an anode, wherein metal particles according to any of the preceding claims are admixed with water or with an aqueous alkaline solution.

10. Anode produced using particles having the features of Claims 1 and 4, comprising
• metal particles composed of zinc or of a zinc alloy,
• an alkaline electrolyte comprising hydroxyl ions and solvated metal ions and
• a gelatnous mass which comprises the at least one first and the at least one second metal oxide according to Claim 1,
where at least the at least one second metal oxide is in hydrated form and the metal particles composed of the zinc or of the zinc alloy are in direct contact with the gelatinous mass, and the gelatinous mass forms a matrix in which the metal particles are incorporated, where the matrix-forming metal oxides are distinguished by homogeneous mixing at a molecular level.

11. Anode according to Claim 10, **characterized in that** the first and/or the fourth at least one metal oxide and/or the third metal oxide are present at least partly in non-hydrated form.

12. Electrochemical cell comprising an anode according to either of the preceding claims.

13. Cell according to Claim 12, **characterized in that** it comprises a manganese dioxide cathode, an air cathode, a silver(I) oxide cathode or a mercury oxide cathode.

## Revendications

1. Particules métalliques revêtues pour une utilisation dans une anode d'une cellule électrochimique, comprenant un noyau métallique, qui est constitué de zinc ou d'un alliage de zinc, et un revêtement, le revêtement étant choisi parmi des particules, contenant de l'oxyde métallique, qui adhèrent à une surface du noyau métallique, ou une couche, contenant de l'oxyde métallique, enveloppant le noyau métallique et la couche contenant de l'oxyde métallique ou les particules contenant de l'oxyde métallique comprenant
- au moins un premier oxyde métallique, qui augmente la surtension d'hydrogène sur le zinc dans un électrolyte alcalin et
- au moins un deuxième oxyde métallique différent du premier oxyde métallique, qui forme une lessive avec l'eau.

2. Particules métalliques selon la revendication 1, **caractérisées en ce que** la couche contenant de l'oxyde métallique ou les particules contenant de l'oxyde métallique comprennent
- en tant que troisième oxyde métallique différent du premier et du deuxième oxyde métallique, de l'oxyde de zinc et/ou
- en tant qu'au moins un quatrième oxyde métallique, au moins un élément du groupe comprenant le dioxyde de silicium, le trioxyde de bore, le pentoxyde de phosphore, le trioxyde de di-arsénium, le dioxyde de germanium, le pentoxyde d'antimoine, l'oxyde de polonium (II), l'oxyde d'étain (II), l'oxyde de cadmium, le dioxyde de titane, l'oxyde de béryllium, l'oxyde de zirconium (IV), l'oxyde de thorium, l'oxyde de sélénium (IV), l'oxyde de fer (II), l'oxyde de manganèse (II), l'oxyde de nickel (II), l'oxyde de cobalt (II), l'oxyde de magnésium et l'oxyde d'aluminium.

3. Particules métalliques selon la revendication 1 ou la revendication 2, **caractérisées en ce que**
- ledit au moins un premier oxyde métallique comprend au moins un élément du groupe constitué par l'oxyde de plomb, l'oxyde d'indium et l'oxyde de bismuth et/ou
- ledit au moins un deuxième oxyde métallique comprend au moins un oxyde de métal alcalin et/ou de métal alcalino-terreux.

4. Particules métalliques selon l'une quelconque des revendications précédentes, **caractérisées en ce que** les particules contenant de l'oxyde métallique ou la couche contenant de l'oxyde métallique
- est/sont constituée(s) par une masse fondue amorphe refroidie ou
- a/ont été obtenue(s) par séchage à partir d'un sol.

5. Particules métalliques selon la revendication 4, **caractérisées en ce que** la grosseur moyenne de particule (d₅₀) des particules servant de noyau métallique est supérieure d'au moins un facteur 6 à la grosseur moyenne de particule des particules utilisées provenant de la masse fondue amorphe refroidie.

6. Particules métalliques selon l'une quelconque des revendications précédentes, **caractérisées en ce que** le revêtement des particules métalliques selon l'invention comprend au moins un oxyde métallique, cet oxyde métallique étant choisi dans le groupe constitué par l'oxyde de silicium, le trioxyde de bore, le pentoxyde de phosphore, l'oxyde de bismuth, l'oxyde de zinc, l'oxyde de plomb et l'oxyde d'aluminium.

7. Particules métalliques selon l'une quelconque des revendications précédentes, **caractérisées en ce que** les particules contenant de l'oxyde métallique ou la couche contenant de l'oxyde métallique
- est/sont constituée(s) à raison d'au moins 80% en poids d'oxydes métalliques et/ou
- présente (nt) une proportion de 25% en poids à 85% en poids dudit au moins un premier oxyde métallique et/ou
- présente(nt) une proportion de 5% en poids à 60% en poids dudit au moins un deuxième oxyde métallique et/ou
- présente (nt) une proportion de 5% en poids à 45% en poids du troisième oxyde métallique et/ou
- présente (nt) une proportion de 10% en poids à 45% en poids dudit au moins un quatrième oxyde métallique,
à chaque fois par rapport au poids des particules contenant de l'oxyde métallique ou de la couche contenant de l'oxyde métallique sans eau.

8. Particules métalliques selon l'une quelconque des revendications précédentes, **caractérisées en ce qu'**elles présentent le zinc ou l'alliage de zinc en une proportion de 75 à 99,9% en poids.

9. Procédé pour la fabrication d'une anode, dans lequel des particules métalliques selon l'une quelconque des revendications précédentes sont additionnées d'eau ou d'une solution alcaline aqueuse.

10. Anode, fabriquée à l'aide de particules présentant les caractéristiques des revendications 1 et 4, contenant
- des particules métalliques de zinc ou d'un alliage de zinc,
- un électrolyte alcalin contenant des ions hydroxy et des ions métalliques solvatés et
- une masse sous forme de gel qui comprend ledit au moins un premier et ledit au moins un deuxième oxyde métallique selon la revendication 1,
au moins ledit au moins un deuxième oxyde métallique se trouvant sous forme hydratée et les particules métalliques de zinc ou d'alliage de zinc étant en contact direct avec la masse sous forme de gel et la masse sous forme de gel formant une matrice dans laquelle les particules métalliques sont incorporées, les oxydes métalliques formant la matrice **se caractérisant par** un mélange homogène sur le plan moléculaire.

11. Anode selon la revendication 10, **caractérisée en ce que** ledit au moins un premier et/ou ledit au moins un quatrième oxyde métallique et/ou le troisième oxyde métallique se trouvent au moins en partie sous forme non hydratée.

12. Cellule électrochimique, comprenant une anode selon l'une quelconque des revendications précédentes.

13. Cellule selon la revendication 12, **caractérisée en ce qu'**elle présente une cathode de pyrolusite, une cathode à air, une cathode d'oxyde d'argent (I) ou une cathode d'oxyde de mercure.
